Europäisches Patentamt

European Patent Office

Office européen des brevets

(11) Veröffentlichungsnummer: **0 396 983**
**A1**

(12) # EUROPÄISCHE PATENTANMELDUNG

(21) Anmeldenummer: **90108075.4**

(51) Int. Cl.⁵: **C09K 7/06**

(22) Anmeldetag: **27.04.90**

(30) Priorität: **06.05.89 DE 3914916**

(43) Veröffentlichungstag der Anmeldung:
**14.11.90 Patentblatt 90/46**

(84) Benannte Vertragsstaaten:
**GR**

(71) Anmelder: **Henkel Kommanditgesellschaft auf Aktien**
**Henkelstrasse 67**
**D-4000 Düsseldorf 13(DE)**

(72) Erfinder: **Endres, Helmut, Dr.**
**Benrodestrasse 82**
**D-4000 Düsseldorf 13(DE)**
Erfinder: **Müller, Heinz**
**Goldregenweg 4**
**D-4019 Monheim(DE)**
Erfinder: **Herold, Claus-Peter, Dr.**
**Ostpreussenstrasse 6**
**D-4020 Mettmann(DE)**
Erfinder: **Hansen, Angela**
**Kapitelstrasse 47**
**D-4040 Neuss 1(DE)**
Erfinder: **Geismar, Günter, Prof., Dr.**
**Ratherstrasse 30**
**D-4150 Krefeld 1(DE)**

(54) **Mittel zum Viskositätsaufbau in nichtwässrigen Flüssigphasen, Verfahren zu ihrer Herstellung und ihre Verwendung.**

(57) Beschrieben werden Mittel zur Beeinflussung der Rheologie, insbesondere zum gesteuerten Viskositätsaufbau nichtwäßriger Flüssigphasen auf Basis hydrophober Öl-dispergierbarer Mischhydroxidverbindungen anorganischer Grundstruktur, die dadurch gekennzeichnet sind, daß sie wenigstens anteilsweise durch feindisperse Teilchen aus anorganischen Schichtverbindungen mit positiver Schichtladung auf Basis 2-dimensionaler anorganischer Polykationen (polykationische Schichtverbindungen) und 1-und/oder mehrbasischen Säureanionen ausgeprägt oleophilen Charakters gebildet werden. Die Erfindung betrifft weiterhin Verfahren zur Herstellung solcher Mittel.

In einer weiteren Ausführungsform wird die Verwendung dieser Mittel in nichtwäßrigen Flüssigphasen, insbesondere als Viskosität ausbildender Gelbildner in W/O-Invert-Bohrspülungen mit geschlossener Ölphase sowie der Aufbau solcher Bohrspülungen beschrieben.

## Mittel zum Viskositätsaufbau in nichtwäßrigen Flüssigphasen, Verfahren zu ihrer Herstellung und ihre Verwendung

Die Erfindung betrifft neue Möglichkeiten zur Beeinflussung und Steuerung der Rheologie nichtwäßriger Flüssigphasen und ermöglicht insbesondere einen gesteuerten Viskositätsaufbau in Flüssigkeiten dieser Art.

Der vorbestimmbaren Regulierung des rheologischen Verhaltens nichtwäßriger Flüssigphasen kommt auf zahlreichen Gebieten der Technologie beträchtliche Bedeutung zu. Ein bedeutendes Beispiel hierfür sind die heute in großem Umfange eingesetzten nichtwäßrigen Bohrspülungen auf Basis sogenannter Invert-Bohrspülungen, die in einer geschlossenen Ölphase eine disperse wäßrige Phase enthalten. Ein wichtiges Einsatzgebiet für solche Bohrspülsysteme sind off-shore-Bohrungen zur Erschließung von Erdöl- und/oder Erdgasvorkommen. Heute finden solche W/O-Emulsionen als Bohrspülsysteme aber auch ganz allgemeine Verwendung bei landgestützten Bohrungen, beispielsweise beim Geothermiebohren, beim Wasserbohren, bei der Durchführung geowissenschaftlicher Bohrungen und bei Bohrungen im Bergbaubereich.

Die Erfindung betrifft in einer wichtigen Ausführungsform verbesserte Bohrspülungen dieses Typs der W/O-Invert-Systeme, so daß im nachfolgenden insbesondere auf dieses Einsatzgebiet Bezug genommen wird, wenn auch die Erfindung keineswegs hierauf eingeschränkt ist.

In der heutigen Praxis werden als Rheologie-regulierende Zusätze für nichtwäßrige Bohrspülungen hydrophobierte Schichtsilikate aus der Gruppe der Bentonite verwendet. Solche Produkte sind beispielsweise unter der Sammelbezeichnung "Bentone" kommerziell erhältlich. Die zum Einarbeiten in die wenig bis unpolare Trägerflüssigkeit notwendige oberflächliche Hydrophobierung erfolgt üblicherweise mit quartären Ammoniumsalzen, deren organische Kationen sich über elektrostatische Wechselwirkungen mit den negativ geladenen Schichtsilikatplättchen verbinden. Solche Produkte sind zwar technisch befriedigend, unter ökologischen Gesichtspunkten müssen sie jedoch als problematisch angesehen werden: Die zum Hydrophobieren verwendeten quartären Ammoniumsalze zeigen im allgemeinen biozide Wirkungen, so daß Umweltschäden nicht ausgeschlossen werden können.

Die Erfindung geht von der Aufgabe aus, ökologisch weniger bedenkliche, in der technischen Praxis aber mindestens gleichwertige Ersatzstoffe für die Beeinflussung und Steuerung der Rheologie solcher nichtwäßriger Flüssigphasen bereitzustellen. Die technische Lösung dieser Aufgabe geht von der Erkenntnis aus, daß ausgewählte anorganische Schichtmaterialien mit positiver Schichtladung (anorganische Polykationen), die zur Interaktion mit 1- und oder mehrbasischen Säureanionen ausgeprägt oleophilen Charakters gebracht worden sind, als Rheologie-regelnde Zusatzstoffe mindestens gleichwertige Ergebnisse liefern wie die bisher üblichen hydrophobierten Bentonitverbindungen.

Gegenstand der Erfindung sind dementsprechend in einer ersten Ausführungsform Mittel zur Beeinflussung der Rheologie, insbesondere zum gesteuerten Viskositätsaufbau nichtwäßriger Flüssigphasen auf Basis hydrophober Öl-dispergierbarer Mischhydroxidverbindungen anorganischer Grundstruktur, wobei das erfindungsgemäße Kennzeichen darin liegt, daß diese Mittel wenigstens anteilsweise durch feindisperse Teilchen aus anorganischen Schichtverbindungen mit positiver Schichtladung auf Basis 2-dimensionaler anorganischer Polykationen (polykationische Schichtverbindungen) und 1 - und/oder mehrbasischen Säureanionen ausgeprägt oleophilen Charakters gebildet werden.

2-dimensionale anorganische Polykationen mit innerkristallinem Ladungsausgleich durch bewegliche Zwischenschichtanionen sind auch unter der Bezeichnung "Doppelschichthydroxide" bekannt und mehrfach in der Literatur beschrieben. Verwiesen wird z. B. auf R. Allmann, "Doppelschichtstrukturen mit brucitähnlichen Schichtionen ...", Chimia 24, 99 bis 108 (1970). Chemisch stellen diese Verbindungen gemischte Hydroxosalze 2- und 3-wertiger Metallionen dar und lassen sich durch die allgemeine Formel charakterisieren:

$$M(II)_{1-x}M(III)_x(OH)_2A_x \cdot n\,H_2O$$

wobei

M(II) für mindestens ein 2-wertiges Metallion,
M(III) für mindestens ein 3-wertiges Metallion und
A für ein Äquivalent einer 1- und/oder mehrbasischen Säure
stehen und
x eine Zahl von 0,01 bis 0,5 sowie
n eine Zahl von 0 bis 20 bedeuten.

Einige Eigenschaften dieser Verbindungsklasse, etwa deren Verwendung als Katalysatormaterial, als Ionenaustauscher und einige medizinische Anwendungen wurden von W. T. Reichle zusammenfassend beschrieben ("Anionic Clay Minerals", CHEMTECH, Jan. 1986, S. 58 bis 63). Verschiedene Möglichkeiten zur technischen Herstellung dieser Verbindungen werden in der DE-OS 20 61 156 angegeben. Ein gut charakterisierter Vertreter dieser Stoffgruppe ist der als Mineral in der Natur vorkommende, aber auch synthetisch herstellbare Hydrotalcit, ein Magnesium-Aluminium-Hydroxocarbonat der ungefähren Zusammensetzung

$Mg_6Al_2(OH)_{16}CO_3 . 4H_2O$,

dessen Struktur röntgenographisch bestimmt wurde (R. Allmann und H. P. Jepsen, "Die Struktur des Hydrotalkits", N. Jahrb. Mineral. Monatsh. 1969, S. 544 bis 551).

Es ist auch bekannt, hydrotalcitartige Schichtverbindungen durch Behandeln mit anionischen oberflächenaktiven Mitteln zu modifizieren. So erwähnt beispielsweise die DE-PS 30 19 632, daß sich auf diese Weise behandelter Hydrotalcit besonders gut zur Stabilisierung von halogenhaltigen Kunststoffen eignet. Die erfindungsgemäße Verwendung der Umsetzungsprodukte anorganischer polykationischer Schichtmaterialien mit Säureanionen ausgeprägt oleophilen Charakters zur Beeinflussung und Steuerung der Rheologie nichtwäßriger Flüssigphasen, insbesondere im Sinne eines gesteuerten Viskositätsaufbaus, wird dadurch jedoch nicht vorweggenommen.

Die EP-OS 207 811 beschreibt die Verwendung von nach einem aufwendigen Verfahren besonders feinteilig hergestellten nichthydrophobierten gemischten Metallhydroxiden in wäßrigen Bohrspülungen. Demgegenüber will die Erfindung gerade nichtwäßrige Flüssigphasen in ihrer Rheologie beeinflussen. Hierzu bedarf es der erfindungsgemäß vorgesehenen Hydrophobierung der polykationischen Schichtverbindungen durch den Einbau der 1- und/oder der mehrbasischen Säureanionen ausgeprägt oleophilen Charakters in das polykationische anorganische Material.

Die erfindungsgemäß vorgesehenen gemischten Hydroxosalze 2-wertiger und 3-wertiger Metallionen bilden in der erfindungsgemäß modifizierten Form hydrophobe feindisperse Festkörper der nachfolgenden allgemeinen Formel I

$M(II)_{1-x}M(III)_x(OH)_2A_x . n H_2O$     (I)

in der

M(II) für mindestens ein 2-wertiges Metallion,

M(III) für mindestens ein 3-wertiges Metallion und

A für ein Äquivalent von Anionen 1- und/oder mehrbasischer Säuren wenigstens anteilsweise ausgeprägt oleophilen Charakters

stehen und

x eine Zahl von 0,01 bis 0,5 sowie

n eine Zahl von 0 bis 20 bedeuten,

wobei sich wenigstens ein solcher Anteil des Restes A von entsprechenden Säuren ausgeprägt oleophilen Charakters ableitet, daß die Festkörper der allgemeinen Formel I hydrophob sind.

Hydrophobes Verhalten zeigt sich bereits beim Einbau von 2 bis 3 Gew.-% (bezogen auf die Gesamtmenge des Festkörpers) eines Säureanions mit ausgeprägt oleophilem Charakter.

Als hydrophobiert im Sinne dieser Erfindung wird ein Festkörper verstanden, der sich bei folgendem Versuch zu mehr als 90 % in der Ölphase dispergiert: 1 g der Prüfsubstanz wird in einem 100-ml-Becherglas in 50 ml vollentsalztes Wasser gegeben. Die wäßrige Phase überschichtet man mit 5 ml Siliconöl (beispielsweise dem Handelsprodukt "Baysilon 100" der Firma BAYER AG) und vermischt die beiden Phasen durch Rühren mit einem Magnetrührer. Der hydrophobe Anteil des Festkörpers dispergiert sich in der Ölphase, die bei starker Festkörperbeladung zusammenklumpen und nach unten absinken kann.

Die 2-wertigen Metallionen M(II) aus der Formel I werden in einer besonders bevorzugten Ausführungsform der erfindungsgemäßen Lehre durch Magnesium, Calcium, Barium oder Zink bzw. durch beliebige Gemische hiervon gebildet. Die Erfindung ist darauf allerdings nicht eingeschränkt. Grundsätzlich können beliebige 2-wertige Metallionen eingesetzt werden, wie sie in einem breiteren Rahmen beispielsweise in der bereits genannten EP-OS 207 811 offenbart sind.

Die bevorzugten Metallionen M(III) aus den Verbindungen der allgemeinen Formel I sind im erfindungsgemäßen Sinne Aluminium und/oder Eisen. Auch hier gilt allerdings, daß diese 3-wertigen Metallionen in breiterem Rahmen verwendbar sind, wie sie in der genannten europäischen Patentanmeldung beispielsweise offenbart sind.

Besondere Bedeutung kommt erfindungsgemäß dem Rest A aus der allgemeinen Formel I zu, der wenigstens anteilsweise durch die hydrophobierenden Säurereste gebildet wird. Hierbei handelt es sich um Anionen oleophiler organischer Verbindungen mit wenigstens einer salzbildenden Säuregruppe. Eine geeignete Säuregruppe dieser Art ist die Carboxylgruppe. Die Erfindung ist hierauf aber nicht eingeschränkt. Daneben oder anstelle solcher Carbonsäurereste sind auch Reste heteroorganischer Säuren geeignet, wobei insbesondere heteroorganische Säuren auf Basis von Schwefel und/oder Phosphor in Betracht kommen können. Hierbei gilt weiterhin das folgende:

Die Säuregruppierung kann mit dem jeweiligen Kern der Säuregruppe unmittelbar an der oleophilen Grundstruktur angreifen. Insbesondere im Fall mehrbasischer Säuregruppen kann allerdings der Anion-bildende Säurerest auch über Heteroatome - beispielsweise Sauerstoff - an den oleophilen organischen Rest gebunden sein. Bedeutungsvoll ist diese letzte Ausführungsform insbesondere für mehrbasische Säuren wie Sulfonsäuren oder Phosphonsäuren, die dann auch in Form ihrer sauren Ester ausgeprägt oleophilen Charakters Verwendung finden können.

Allgemein gilt damit, daß die erfindungsgemäßen Mittel der allgemeinen Formel I in bevorzugten Ausführungsformen Verbindungen sind, in denen sich die hydrophobierenden anionischen Säurereste A von Verbindungen R-X (IIa) und/oder von Verbindungen der Formel R-O-Y (IIb) ableiten, wobei für diese beiden allgemeinen Formeln das nachfolgende gilt:

R steht für einen ausgeprägt oleophilen Kohlenwasserstoffrest mit vorzugsweise mindestens 6 C-Atomen, X steht für die anionischen Reste der Säuregruppierung, die sich bevorzugt ableiten können von -COOH, $-SO_3H$ und/oder $-PO_3HR'$. Y ist in einer möglichen Ausführungsform der anionische Rest von $-SO_3H$ oder $-PO_3HR'$, wobei schließlich in diesen Fällen $R'$ jeweils Wasserstoff- oder einen Kohlenwasserstoffrest - insbesondere einen Alkylrest - mit beispielsweise bis zu 20 C-Atomen bedeuten kann.

Besonders geeignete Säureanionen A aus der allgemeinen Formel I leiten sich von Säuren ab, die unter die allgemeinen Formeln IIa und/oder IIb fallen, wobei der Rest R hier jeweils für einen linearen oder verzweigten, gesättigten oder ungesättigten Alkyl-und/oder Arylalkylrest steht. Diese reinen Kohlenwasserstoffreste können auch substituiert sein. Geeignete Substituenten sind insbesondere Hydroxyl-, Thiol-und/oder Aminogruppen. Eine besonders bevorzugte Bedeutung für den Rest R sind Kohlenwasserstoffreste der zuvor angegebenen Art mit 8 bis 36 C-Atomen. Geeignet können hier insbesondere entsprechende Carbonsäuren natürlichen und/oder synthetischen Ursprungs sein, wobei Carbonsäuregemischen natürlichen Ursprungs besondere Bedeutung zukommen kann. Durchweg handelt es sich hier um hydrophobierende anionische Reste A in der allgemeinen Formel I, die sich von umweltverträglichen Verbindungen niederer Toxizität ableiten und damit diesem Aspekt der erfindungsgemäßen Aufgabenstellung besonders gerecht werden.

Die Erfindung umfaßt in einer weiteren Ausführungsform Verfahren zur Herstellung der zuvor beschriebenen Mittel und insbesondere von feindispersen Verbindungen der allgemeinen Formel I. Hier stehen grundsätzlich mehrere Wege zur Verfügung:

In einer ersten Ausführungsform werden zunächst in an sich bekannter Weise polykationische Schichtverbindungen der angegebenen Art hergestellt, in denen jedoch der innerkristalline Ladungsausgleich durch Anionen bewirkt wird, die in ihrer Konstitution von den erfindungsgemäß definierten anionischen Resten A aus der allgemeinen Formel I abweichen. In Betracht kommen hier sowohl anorganische wie organische Säurereste, wobei im allgemeinen die salzbildenden Säurereste aus den zur Synthese der Doppelschichthydroxide eingesetzten Metallsalze vorliegen. In einer nachfolgenden Reaktion werden dann die primär angefallenen Mischhydroxidverbindungen mit den ausgewählten 1- und/oder mehrbasischen Säuren ausgeprägt oleophilen Charakters und/oder deren im Reaktionsmedium löslichen Salzen behandelt. Hierbei tritt wenigstens eine umhüllende Hydrophobierung der polykationischen anorganischen Schichtmaterialien unter Umsalzung ein. Hydroxosalze dieser Art sind dann öldispergierbar und können zur Rheologiesteuerung im erfindungsgemäßen Sinne Verwendung finden.

Diese nachträgliche Hydrophobierung vorgeformter kationischer Schichtverbindungen ist jedoch nur eine Möglichkeit, Mittel für den erfindunsgemäßen Einsatzzweck bereitzustellen. Günstigere Alternativen bestehen darin, die Herstellung der gemischten Metallhydroxosalze direkt in Gegenwart der hydrophobierenden Säuren bzw. Säureanionen durchzuführen.

In einer Ausführungsform der Erfindung wird hier mit Hilfe von Flüssigphasen beispielsweise wie folgt gearbeitet: Eine alkalisch eingestellte Lösung der hydrophobierenden Säure, beispielsweise einer Alkansäure oder eines Alkansäuregemisches, wird mit einer Lösung der 2-wertigen und 3-wertigen Metallkationen im erforderlichen Molverhältnis vermischt. Als Flüssigphase bzw. Lösungsmittel können Wasser und/oder wäßrig-organische Flüssigphasen eingesetzt werden. In an sich bekannter Weise wird dann in diesem System die Bildung des gemischten Hydroxosalzes beispielsweise durch Erhitzen bewirkt. Einzelheiten finden sich in dem zitierten Stand der Technik zur Bildung von Doppelschichthyxdroxiden der hier betroffenen Art.

Ein weiterer und besonders geeigneter Syntheseweg besteht darin, das oder die Hydroxid(e) der einen Metallkomponente(n) -also beispielsweise der 2-wertigen Metallkomponenten - mit einem leicht schmelzbaren Salz der weiteren benötigten Metallkomponente(n) in der Schmelze umzusetzen, wobei diese zuletzt genannten Metallsalze die 1- und/oder mehrbasischen Säureanionen ausgeprägt oleophilen Charakters bereits als salzbildende Komponente enthalten. Nach der Umsetzung der Reaktanten in der Schmelze wird die erkaltete Schmelze anschließend vermahlen.

Die Erfindung umfaßt in einer weiteren Ausführungsform die Verwendung der eingangs beschriebenen

4

Mittel in nichtwäßrigen Flüssigphasen insbesondere als Strukturbildner und Viskositätsstellmittel. Besonders wichtig ist im Rahmen der Erfindung die Verwendung dieser Mittel als Rheologie modifizierendes Agens in W/O-Invert-Bohrspülungen mit geschlossener Ölphase und disperser wäßriger Phase.

Schließlich fallen in den Rahmen der Erfindung W/O-Invert-Bohrspülungen der zuletzt genannten Art, die dadurch gekennzeichnet sind, daß sie als Rheologie modifizierendes Agens wenigstens anteilsweise die zuvor geschilderten Mittel der Erfindung, insbesondere der allgemeinen Formel I enthalten. Zum Aufbau, zur Beschaffenheit und zum Anforderungsprofil an solche Invert-Bohrspülsysteme wird auf den einschlägigen Stand der Technik verwiesen. Bohrspülungen dieser Art bestehen aus einem 3-Phasen-System: Öl, Wasser und feinteilige Feststoffe. Zur Stabilisierung der feindispers in der geschlossenen Ölphase verteilten wäßrigen Phase und zur Stabilisierung des Gesamtsystems sowie zur Einstellung der gewünschten Gebrauchseigenschaften ist eine Mehrzahl von Zusatzstoffen vorgesehen, insbesondere Emulgatoren, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology -Mineral Oil Mud" Journal of Petroleum Technology, 1984, 975 bis 981 sowie die darin zitierte Literatur.

Als Ölphase werden ausgewählte Dieselölfraktionen sowie insbesondere in letzter Zeit zunehmend wenigstens weitgehend aromatenfreie reine Kohlenwasserstofföle eingesetzt. Die einschlägige Technologie hat seit einiger Zeit die Bedeutung der durch diese Ölphasen ausgelösten Umweltproblematik erkannt. Hieraus erklärt sich die zunehmende Bedeutung der Ölspülungen auf Basis sogenannter nonpolluting oils. Zu der Klasse der nonpolluting oils werden neben den aromatenfreien Mineralölfraktionen insbesondere Ölphasen auf Esterbasis gerechnet. Brauchbare und gerade aus dem Gesichtspunkt des Umweltschutzes deutlich verbesserte Esteröle bzw. Invert-Bohrspülsysteme auf Basis von Esterölen sind Gegenstand einer Reihe von älteren Anmeldungen der Anmelderin. Verwiesen wird hier insbesondere auf die Anmeldungen P 38 42 659.5 und P 38 42 703.6, die älteren Patentanmeldungen P 39 07 391.2 und P 39 07 392.0 sowie auf die damit im Zusammenhang stehende Weiterentwicklung solcher Invert-Bohrspülungen auf Esterölbasis aus der älteren Anmeldung P 39 03 785.1 der Anmelderin. Die Offenbarung aller dieser älteren Anmeldungen hat prinzipiell Gültigkeit auch für die im Rahmen der vorliegenden Anmeldung beschriebene Modifikation, die den Austausch des strukturbildenden Gelbildners zum Gegenstand hat. Die Offenbarung dieser genannten älteren Anmeldungen zur grundsätzlichen Beschaffenheit solcher W/O-Invert-Bohrspülflüssigkeiten wird hiermit ausdrücklich auch zum Gegenstand der vorliegenden Erfindungsoffenbarung gemacht.

Zu berücksichtigen sind in diesem Zusammenhang schließlich auch noch die älteren Anmeldungen P 39 11 238,1 sowie P 39 11 299.3, die ebenfalls neuartige Systeme auf W/O-Basis für den Zweck der Bohrspülungen betreffen und sich durch erhöhte Umweltverträglichkeit auszeichnen. In allen diesen Materialien können die erfindungsgemäß beschriebenen strukturbildenden Gelbildner mit Vorteil eingesetzt werden.

Die Menge der erfindungsgemäß verwendeten Viskositätsbildner entspricht in etwa den Mengen der bisher eingesetzten Komponenten auf Basis kationisch modifizierter feinteiliger Bentonite. Geeignet sind also Zusatzmengen insbesondere im Bereich von etwa 0,5 bis 5 Gew.-%, vorzugsweise im Bereich von etwa 0,8 bis 3,5 Gew.-%, bezogen auf die Ölphase.

Weiterhin gilt das Folgende:

Invert-Bohrspülschlämme der hier betroffenen Art enthalten üblicherweise zusammen mit der geschlossenen Ölphase die feindisperse wäßrige Phase in Mengen von etwa 5 bis 45 Gew.-% und vorzugsweise in Mengen von etwa 5 bis 25 Gew.-%. Dem Bereich von etwa 10 bis 25 Gew.-% an disperser wäßriger Phase kann besondere Bedeutung zukommen.

Für die Rheologie bevorzugter Invert-Bohrspülungen im Sinne der Erfindung gelten die folgenden rheologischen Daten: Plastische Viskosität (PV) im Bereich von etwa 10 bis 60 mPas, bevorzugt von etwa 15 bis 40 mPas, Fließgrenze (Yield Point YP) im Bereich von etwa 5 bis 40 lb/100 ft$^2$, bevorzugt von etwa 10 bis 25 lb/100 ft$^2$ - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist. Zusammenfassend kann hier zum Zwecke der Vervollständigung der Erfindungsoffenbarung das folgende gesagt werden:

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, bei-

EP 0 396 983 A1

spielsweise solche auf Basis von Amidoaminverbindungen.

Beispiele hierfür werden in der US-PS 4,374,737 und der dort zitierten Literatur beschrieben. Ein besonders geeigneter Emulgatortyp ist das von der Firma NL Baroid unter dem Handelsnamen "EZ-mul" vertriebene Produkt.

Emulgatoren der hier betroffenen Art werden im Handel als hochkonzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Ölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von etwa 15 bis 20 lb/bbl oder im Bereich von etwa 5 bis 7 Gew.-% - bezogen auf die Ölphase.

Das in der einschlägigen Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt wird. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen.

Die disperse wäßrige Phase wird in Invert-Bohrspülungen der hier betroffenen Art mit löslichen Salzen beladen. Überwiegend kommt hier Calciumchlorid und/oder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmaterialien zu verbessern. Neben den bereits genannten Aminoamiden sind als weitere Beispiele Alkylbenzolsulfonate sowie Imidazolinverbindungen zu nenen. Zusätzliche Angaben zum einschlägigen Stand der Technik finden sich in den folgenden Literaturstellen: GB 2 158 437, EP 229 912 und DE 32 47 123.

Beispiele

Beispiel 1

200 g kommerzieller Hydrotalcit werden in einem Liter i-Propanol suspendiert. 132 g Laurinsäure werden in einem Liter i-Propanol soweit wie möglich gelöst und zur Hydrotalcitsuspension gegeben. Die resultierende Suspension wird vier Stunden bei Raumtemperatur gerührt anschließend eine Stunde am Rückfluß gekocht. Danach wird der Festkörper abfiltriert, mit i-Propanol gewaschen und im Trockenschrank bei 110 °C getrocknet.

Beispiel 2

200 g kommerzieller Hydrotalcit werden in einem Liter i-Propanol suspendiert. 187 g Stearinsäure werden in einem Liter i-Propanol soweit wie möglich gelöst und zur Hydrotalcitsuspension gegeben. Die resultierende Suspension wird vier Stunden bei Raumtemperatur gerührt anschließend eine Stunde am Rückfluß gekocht. Danach wird der Festkörper abfiltriert, mit i-Propanol gewaschen und im Trockenschrank bei 110 °C getrocknet.

Beispiel 3

315,5 g eines technischen Rüböl-Spaltfettsäuregemisches werden mit 400 g kommerziellem Hydrotalcit versetzt und verrührt. Das halbfeste krümelige Produkt wird im Trockenschrank bei 110 °C nachgetrocknet.

Beispiel 4

155,6 g eines technischen Rüböl-Spaltfettsäuregemisches werden mit 400 g kommerziellem Hydrotalcit versetzt und verrührt. Das halbfeste krümelige Produkt wird im Trockenschrank bei 110 °C nachgetrocknet.

6

Beispiel 5

Eine Mischung von 22,5 g Al(OH)$_3$ und 100 g Zinkstearat wird bei 125 bis 130 °C aufgeschmolzen und eine Stunde bei dieser Temperatur gehalten. Der abgekühlte Schmelzkuchen wird anschließend vermahlen.

Beispiel 6

100 g kommerzieller Hydrotalcit werden in einem Liter Wasser suspendiert und 67,2 g Dodecylbenzolsulfonsäure zugegeben. Die Suspension wird eine Stunde bei Raumtemperatur gerührt, der Festkörper abgesaugt, mit Wasser gewaschen und getrocknet.

Beispiel 7

1800 ml Wasser werden mit 200 g eines technischen Rüböl-Spaltfettsäuregemisches sowie mit 500 g 50 gew.-%iger Natronlauge versetzt. Zu dieser Mischung läßt man unter Rühren bei Raumtemperatur eine Lösung aus 230 g Magnesiumnitrat-Hexahydrat und 169 g Aluminiumnitat-Nonahydrat in 630 g Wasser tropfen (Schaumbildung!). Nach beendeter Zugabe wird vier Stunden bei 65 °C weitergerührt, der Festkörper abgesaugt, mit Wasser gewaschen und bei 110 °C im Trockenschrank getrocknet.

Beispiel 8

Man bereitet eine Lösung von 410 g Magnesiumnitrat-Hexahydrat und 300 g Aluminiumnitrat-Nonahydrat in 8000 g vollentsalztem (VE) Wasser sowie eine zweite Lösung aus 448 g 50 gew.-%iger Natronlauge und 160 g Natriumcarbonat (wasserfrei) in 8000 g VE-Wasser. Die beiden Lösungen werden mit Schlauchpumpen durch die Schenkel eines Y-förmigen Rohres in ein Auffanggefäß gepumpt, der entstandene Hydrotalcit-Niederschlag abgesaugt und mit VE-Wasser gewaschen. Das pastöse Produkt mit einem Feststoffgehalt von maximal 70 Gew.-% (bestimmt durch Trocknen bei 110 °C) wird nicht weiter getrocknet, so daß die feinen Primärteilchen nicht weiter agglomerieren.

100 g der obigen Paste mit einem Feststoffgehalt von etwa 25 Gew.-% werden in 250 ml VE-Wasser aufgeschlämmt und bei Raumtemperatur mit 2,5 g Phosphonoessigsäuremonoethylester versetzt. Die Mischung wird eine Stunde bei Raumtemperatur gerührt, filtriert, mit Wasser gewaschen und bei 110 °C im Trockenschrank getrocknet.

Beispiel 9

100 g der Hydrotalcit-Paste aus Beispiel 8 werden in 250 ml VE-Wasser aufgeschlämmt und bei Raumtemperatur mit 5 g 12-Hydroxystearinsäure versetzt. Die Mischung wird eine Stunde bei Raumtemperatur gerührt, filtriert, mit Wasser gewaschen und bei 110 °C im Trockenschrank getrocknet.

Beispiel 10

Erfindungsgemäße rheologieregulierende Zusätze sowie Vergleichsprodukte nach dem Stand der Technik wurden in einer Diesel-Spülung mit folgender Rezeptur geprüft:

| | |
|---|---|
| 168 g | Dieselöl |
| 6 g | W/O-Emulgator {"Invermul" der Fa. NL Baroid) |
| 3 g | Kalk |
| 6 g | organophiler Lignit ("Duratone" der Fa. NL Baroid) |
| 3 g | W/O-Emulgator ("EZ-mul NT" der Fa. NL Baroid) |
| 73 g | CaCl$_2$-Lösung |
| 470 g | Baryt |
| 2 g | rheologieregulierender Zusatz gemäß untenstehender Tabelle |

Als Prüfparameter wurden gemessen: Plastische Viskosität (PV) in cP und Yield Point (YP) in lb/100 ft$^2$ sowie die Gelstärke (GS) in lb/100 ft$^2$ für 10 sec. und 10 min., wobei sich jeweils die erste Angabe in der Tabelle auf den Wert nach der Herstellung der Spülung, die zweite Angabe auf den Wert nach Alterung (16 Stunden) bei 250 °F beziehen.

| Zusatz aus Beispiel Nr. | PV | YP | GS |
|---|---|---|---|
| 1 | 41 / 35 | 10 / 7 | 4;5 / 4;6 |
| 2 | 43 / 36 | 13 / 13 | 5;6 / 5;6 |
| 4 | 42 / 41 | 14 / 11 | 5;6 / 5;6 |
| 5 | 43 / 43 | 10 / 11 | 4;5 / 5;6 |
| 6 | 42 / 42 | 8 / 11 | 4;5 / 5;7 |
| 7 | 43 / 43 | 11 / 8 | 5;6 / 5;6 |
| 8 | 40 / 35 | 12 / 11 | 4;4 / 4;5 |
| 9 | 41 / 41 | 10 / 14 | 4;4 / 5;6 |
| Geltone II (Vergleich) | 50 / 45 | 38 / 39 | 15;18 / 15;19 |
| Omnigel (Vergleich) | 47 / 44 | 19 / 41 | 8,11 / 16;21 |
| Perchem (Vergleich) | 50 / 45 | 21 / 42 | 8;10 / 16;20 |

Beispiel 11

Erfindungsgemäße rheologieregulierende Zusätze sowie Vergleichsprodukte nach dem Stand der Technik wurden in einer Ester-Spülung mit folgender Rezeptur geprüft:

| | |
|---|---|
| 200 ml | Esteröl (Isobutyloleat auf Basis Eruca-armes Rüböl) |
| 50,9 ml | Wasser |
| 1,9 g | Diethanolamin |
| 7,8 g | fluid-loss-reducer |
| 7,5 g | W/O-Emulgator ("EZ-mul NT" der Fa. NL Baroid) |
| 326 g | Baryt |
| 17,5 g | Kaliumchlorid |
| 1,5 g | rheologieregulierender Zusatz gemäß untenstehender Tabelle |

EP 0 396 983 A1

| Zusatz aus Beispiel Nr. | PV | YP | GS |
|---|---|---|---|
| 2 | 54 / 45 | 39 / 40 | 24;15 / 16;17 |
| 3 | 44 / 38 | 36 / 37 | 22;25 / 19;20 |
| 7 | 46 / 41 | 37 / 36 | 23;26 / 19;19 |
| Bentone (Vergleich) | 61 / 47 | 37 / 41 | 24;26 / 17;19 |

**Ansprüche**

1. Mittel zur Beeinflussung der Rheologie, insbesondere zum gesteuerten Viskositätsaufbau nichtwäßriger Flüssigphasen auf Basis hydrophober Öl-dispergierbarer Mischhydroxidverbindungen anorganischer Grundstruktur, dadurch gekennzeichnet, daß sie wenigstens anteilsweise durch feindisperse Teilchen aus anorganischen Schichtverbindungen mit positiver Schichtladung auf Basis 2-dimensionaler anorganischer Polykationen (polykationische Schichtverbindungen) und 1- und/oder mehrbasischen Säureanionen ausgeprägt oleophilen Charakters gebildet werden.

2. Mittel nach Anspruch 1, dadurch gekennzeichnet, daß sie als polykationische Schichtverbindungen gemischte Hydroxosalze 2-wertiger und 3-wertiger Metallionen enthalten.

3. Mittel nach Ansprüchen 1 und 2, dadurch gekennzeichnet, daß sie hydrophobe feindisperse Mischhydroxidverbindungen der nachfolgenden allgemeinen Formel I enthalten

$$M(II)_{1-x}M(III)_x(OH)_2A_x \cdot n\,H_2O \qquad (I)$$

in der

M(II) für mindestens ein 2-wertiges Metallion,

M(III) für mindestens ein 3-wertiges Metallion und

A für ein Äquivalent von Anionen 1- und/oder mehrbasischer Säuren wenigstens anteilsweise ausgeprägt oleophilen Charakters

stehen und

x eine Zahl von 0,01 bis 0,5 sowie

n eine Zahl von 0 bis 20 bedeuten,

wobei sich wenigstens ein solcher Anteil des Restes A von entsprechenden Säuren ausgeprägt oleophilen Charakters ableitet, daß die Festkörper der allgemeinen Formel I hydrophob sind.

4. Mittel nach Ansprüchen 1 bis 3, dadurch gekennzeichnet, daß sie Festkörper der allgemeinen Formel I enthalten, in denen M(II) für Magnesium, Calcium, Barium und/oder Zink und M(III) für Aluminium und/oder Eisen stehen.

5. Mittel nach Ansprüchen 1 bis 4, dadurch gekennzeichnet, daß sie Festkörper der allgemeinen Formel I enthalten, in denen als hydrophobierender Rest A Anionen oleophiler organischer Verbindungen mit wenigstens einer salzbildenden Säuregruppe, vorzugsweise aus der Klasse der Carboxylgruppen und/oder heteroorganischer Säurereste, insbesondere auf Basis Schwefel und/oder Phosphor, vorliegen, wobei im Fall mehrbasischer Säuregruppen der Anion-bildende Säurerest auch über Heteroatome an den oleophilen organischen Rest gebunden sein kann.

6. Mittel nach Ansprüchen 1 bis 5, dadurch gekennzeichnet, daß sie Festkörper der allgemeinen Formel I enthalten, in denen sich die hydrophobierenden anionischen Säurereste A von Verbindungen der allgemeinen Formeln R-X (IIa) und/oder R-O-Y (IIb) ableiten, wobei in diesen Formeln X für eine -COOH, -SO$_3$H oder -PO$_3$HR' Gruppe und Y für eine -SO$_3$H oder -PO$_3$HR' Gruppe stehen und R einen Kohlenwasserstoffrest mit mindestens sechs C-Atomen sowie R' Wasserstoff oder einen Alkylrest mit 1 bis 20 C-Atomen bedeuten.

7. Mittel nach Ansprüchen 1 bis 6, dadurch gekennzeichnet, daß sie Festkörper der allgemeinen Formel I in Verbindung mit den allgemeinen Formeln IIa und/oder IIb enthalten, bei denen R für einen linearen oder verzweigten, gesättigten oder ungesättigten Alkyl- oder Arylalkylrest steht, der auch mit Hydroxyl-, Thiol- und/oder Aminogruppen substituiert sein kann.

8. Mittel nach Ansprüchen 1 bis 7, dadurch gekennzeichnet, daß sie Festkörper der allgemeinen Formel I in Verbindung mit den allgemeinen Formeln IIa und/oder IIb enthalten, bei denen der Rest R 8 bis 36 C-Atome enthält.

9. Mittel nach Ansprüchen 1 bis 8, dadurch gekennzeichnet, daß in den Verbindungen der allgemeinen Formel I sich der anionische Rest A von umweltverträglichen Verbindungen niederer Toxizität ableitet.

9

10. Verwendung der Mittel nach Ansprüchen 1 bis 9 in nichtwäßrigen Flüssigphasen, insbesondere als Strukturbildner und Viskositätsstellmittel.

11. Ausführungsform nach Anspruch 10, dadurch gekennzeichnet, daß die Mittel in W/O-Emulsionen insbesondere als Viskositäts ausbildender Gelbildner in W/O-Invert-Bohrspülungen mit geschlossener Ölphase zum Einsatz kommen.

12. Verfahren zur Herstellung von Verbindungen der allgemeinen Formel I, dadurch gekennzeichnet, daß in vorgebildete polykationische Schichtverbindungen gemäß dieser Formel I, in denen der Rest A jedoch eine von der erfindungsgemäßen Definition abweichende Bedeutung hat, die 1- und/oder mehrbasischen Säureanionen ausgeprägt oleophilen Charakters in an sich bekannter Weise durch eine Nachbehandlung eingeführt werden oder daß man die Verbindungen der allgemeinen Formel I durch unmittelbare Umsetzung aller Reaktanten in der Schmelze oder in bevorzugt alkalischer Lösung gewinnt.

13. Verfahren nach Anspruch 12, dadurch gekennzeichnet, daß man die hydrophobierenden Säureanionen ausgeprägt oleophilen Charakters insbesondere bei der Synthese in der Schmelze als Salz der eingesetzten 2- und/oder 3-wertigen Metalle einbringt und dort mit dem bevorzugt in Hydroxidform vorliegenden restlichen Reaktanten umsetzt.

14. Verfahren nach Anspruch 12, dadurch gekennzeichnet, daß bei der Umsetzung in einem Lösungsmittel - bevorzugt auf wäßriger Basis - Salze und/oder Hydroxide der 2- und 3-wertigen Metalle mit den Salzen, bevorzugt den Alkalisalzen der 1- und/oder mehrbasischen Säuren ausgeprägt oleophilen Charakters umgesetzt werden.

15. W/O-Invert-Bohrspülungen, die für die Erschließung von beispielsweise Erdöl- bzw. Erdgasvorkommen geeignet sind und in einer geschlossenen Ölphase eine disperse wäßrige Phase zusammen mit üblichen Hilfsstoffen wie Emulgatoren, Beschwerungsmitteln, fluid-loss-Additiven und gewünschtenfalls weiteren Zusatzstoffen enthalten, dadurch gekennzeichnet, daß sie als Viskositäts regulierenden Gelbildner wenigstens anteilsweise die Mittel nach Ansprüchen 1 bis 9 enthalten.

16. Bohrspülungen nach Anspruch 15, dadurch gekennzeichnet, daß sie als Ölphase sogenannte nonpolluting oils, insbesondere aus der Klasse der wenigstens weitgehend aromatenfreien Kohlenwasserstoffverbindungen, der Esteröle, der Alkohole und/oder der Ether enthalten.

17. Bohrspülungen nach Ansprüchen 15 und 16, dadurch gekennzeichnet, daß sie als ökologisch verträgliche Öle wenigstens anteilsweise Esteröle insbesondere aus Monocarbonsäuren und 1- und/oder 2-funktionellen Alkoholen enthalten, die im Temperaturbereich von 0 bis 5 °C fließ-und pumpfähig sind und Flammpunkte oberhalb 80 °C aufweisen.

18. Bohrspülungen nach Ansprüchen 15 bis 17, dadurch gekennzeichnet, daß sie eine Plastische Viskosität (PV) im Bereich von etwa 10 bis 60 mPas und eine Fließgrenze (Yield Point YP) im Bereich von etwa 5 bis 40 lb/100 ft$^2$ - jeweils bestimmt bei 50 °C - aufweisen.

19. Bohrspülungen nach Ansprüchen 15 bis 18, dadurch gekennzeichnet, daß ihr disperser Wasseranteil etwa 5 bis 45 Gew.-%, bevorzugt etwa 10 bis 25 Gew.-% ausmacht und insbesondere Salze von der Art $CaCl_2$ und/oder $KCl$ gelöst enthält.

20. Bohrspülungen nach Ansprüchen 15 bis 19, dadurch gekennzeichnet, daß die Ölphase der Invert-Bohrspülung im Temperaturbereich von 0 bis 5 °C eine Brookfield(RVT)-Viskosität unterhalb 50 mPas, vorzugsweise nicht über 40 mPas aufweist.

| Europäisches Patentamt | EUROPÄISCHER RECHERCHENBERICHT | Nummer der Anmeldung EP 90 10 8075 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 287 086 (C.M. FINLAYSON) * Spalte 1, Zeilen 11-17; Spalte 2, Zeile 60 - Spalte 3, Zeile 59; Spalte 4, Zeilen 16-41; Ansprüche 1-12 * --- | 1 | C 09 K 7/06 |
| A | US-A-4 508 628 (T.O. WALKER) * Spalte 1, Zeilen 5-9; Spalte 3, Zeilen 59-65; Spalte 4, Zeilen 45-57; Spalte 5, Zeile 59 - Spalte 7, Zeile 27 * --- | 1-15,16 | |
| A | EP-A-0 063 631 (KYOWA CHEMICAL) * Seite 3, Zeilen 9-32; Seite 5, Zeilen 2-18 * ----- | 1-3 | |

| | RECHERCHIERTE SACHGEBIETE (Int. Cl.5) |
|---|---|
| | C 09 K |

Der vorliegende Recherchenbericht wurde für alle Patentansprüche erstellt

| Recherchenort | Abschlußdatum der Recherche | Prüfer |
|---|---|---|
| DEN HAAG | 16-07-1990 | BOULON A.F.J. |